# EUROPÄISCHE PATENTSCHRIFT

(11) **EP 2 607 586 B1**
(45) Veröffentlichungstag und Bekanntmachung des Hinweises auf die Patenterteilung: **03.09.2014**
(21) Anmeldenummer: 13160562.8
(22) Anmeldetag: 26.08.2008
(51) Int. Cl.: E05D 5/02, F16B 5/02, F16B 19/02

(54) **Baugruppe und Befestigungsvorrichtung**
Module and fixing device
Module et dispositif de fixation

(30) Priorität: 05.09.2007 DE 202007012425 U; 05.09.2007 DE 202007012426 U
(43) Veröffentlichungstag der Anmeldung: 26.06.2013
(62) Teilanmeldung aus: 08787491.3
(73) Patentinhaber: Dr. Hahn GmbH & Co. KG, 41189 Mönchengladbach-Wickrath (DE)
(72) Erfinder: Niessen, Rainer, 47799 Krefeld (DE); Klemenz, Rainer, 41334 Nettetal (DE); Peters, Rudi, 41844 Wegberg (DE); Steinfeld, Ingo, 40764 Langenfeld (DE)
(74) Vertreter: Kluin, Jörg-Eden

(56) Entgegenhaltungen:
- EP-A- 0 478 928
- EP-A1- 1 193 408
- WO-A-2008/110248
- DE-A1- 10 341 033
- DE-C1- 3 521 783
- DE-U1- 20 116 183
- DE-U1- 29 922 023
- FR-A1- 2 443 604

## Beschreibung

Die Erfindung betrifft eine Baugruppe mit einem ein Außengewinde umfassenden Gewindezapfen und mit einem Schraubelement, welches auf den Gewindezapfen aufschraubbar ist sowie eine diese Baugruppe umfassende Befestigungsvorrichtung zur Befestigung eines Beschlagteils an einem Hohlprofil.

Eine derartige Baugruppe zur Befestigung eines Beschlagteils an einem mit einem vorgesetzten Profilteil versehenen Hohlprofil ist beispielsweise aus der DE 35 21 783 C1 bekannt. Zur Befestigung des Beschlagteils weist das Schraubelement eine Gewindebohrung auf, in die eine das Beschlagteil in einer Bohrung durchsetzende Befestigungsschraube eindrehbar ist, so dass bei angezogener Befestigungsschraube das Beschlagteil gegen das Schraubelement gezogen wird.

Um zu vermeiden, dass sich beim Festziehen der Befestigungsschraube das Schraubelement mitdreht und somit auf den Gewindezapfen aufgeschraubt wird wodurch der Befestigungsort des Beschlagteils unerwünscht verändert würde, beziehungsweise dass beim Lösen der Befestigungsschraube das Schraubelement unerwünscht von dem Gewindezapfen heruntergedreht wird, umfasst dieses Schraubelement eine umlaufende Rändelung, deren Spitzen etwas über den ansonsten zylindrischen und in seinem Durchmesser dem Durchmesser einer in dem Profil versehenen Bohrung entsprechenden Umfang des Schraubelements vorstehen. Beim Eindringen des Schraubelements in der letzten Phase kurz vor Erreichen der Planlage seiner Stirnflächen mit der Fläche, an welcher das Beschlagteil anliegen soll, kommen diese Spitzen am Innenumfang der Bohrung zur Anlage und verursachen eine Schwergängigkeit beziehungsweise eine gewisse Drehhemmung des Schraubelements.

Nachteilig ist bei diesem Stand der Technik, dass zur Fixierung des Schraubelements gegen unerwünschtes Mitdrehen beim Befestigen beziehungsweise Lösen des Beschlagelements ein Zusammenwirken mit einem weiteren Bauteil, im Falle der in der DE 35 21 783 C1 beschriebenen Anwendung mit einer Profilwandung, erforderlich ist.

Insbesondere dann, wenn ein solches Bauteil nicht vorhanden oder zur Aufnahme der Drehhemmung nicht geeignet ist, muss das Schraubelement zur Beibehaltung seiner Positionierung gegen Rotation gesichert werden. Hierzu ist es regelmäßig erforderlich, die Möglichkeit des Angriffs eines die Drehsicherung wirkenden Werkzeuges zu schaffen, was zusätzlichen Arbeitsaufwand erfordert.

Darüber hinaus ist es insbesondere dann, wenn die Baugruppe von außen nicht zugängig ist, gar nicht möglich ein geeignetes Werkzeug anzusetzen.

Aus der DE 103 41 033 A1 ist eine Vorrichtung zum Verbinden von mit Abstand zueinander liegenden Bauteilen bekannt. Die Vorrichtung umfasst eine Distanzhülse mit einem Rechtsgewinde und einem Linksgewinde. Um während des Zusammenfügens ein Mitdrehen der Hülse zu gewährleisten, kann eine der Gewindepaarungen mit einem definierten Haftmoment ausgestattet sein.

Die FR 2 443 604 A1 offenbart eine Isolierbuchse, die an ihren beiden Enden zwei koachsiale Muttern aufweisen kann. Es ist offenbart, diese Buchse auf einen verschweißten Bolzen mit einer dieser Muttern aufzuschrauben und in die andere Mutter eine Befestigungsschraube einzudrehen.

Die EP 0 478 928 A zeigt eine Hammermutter. Die in Einschraubrichtung des Gewindebolzens letzten Gewindegänge des Muttergewindes können unvollständig ausgeformt sein.

Aus der EP 1 193 408 A1 ist eine selbstsichernde Gewindeverbindung bekannt, bei der Nuten in die Gewindeflanken eingebracht sind, deren Wände über den gewöhnlichen Gewindeflankenquerschnitt hinausstehen.

Die DE 35 21 783 C1 offenbart eine Abstandsbüchse, in die von beiden Seiten jeweils ein Gewindezapfen eingedreht ist. Einer dieser Gewindezapfen ist seinerseits mittels einem Gewindestück an einer Profilwand verschraubt. Es kann ein Gewindering vorgesehen sein, zur Konterung der Gewindebüchse auf diesem Gewindezapfen.

Die DE 201 16 183 U1 offenbart eine Abstandsbüchse, in die von beiden Seiten jeweils ein Gewindezapfen eingedreht ist.

Die DE 299 22 023 U1 offenbart eine Befestigung eines Bandlappens an einem Hohlprofil, mittels einer zwei ineinander verschraubte Gewindebüchsen aufweisenden Abstandsbüchse. Die Abstandsbüchse kann auf der dem Bandlappen abgewandten Seite des Hohlprofils mittels einer Schraube mit einer Befestigungsplatte verschraubt sein. Von der anderen Seite kann in diese Gewindebüchse eine Befestigungsschraube eingedreht sein.

Die nicht vorveröffentliche WO 2008/110248 A zeigt eine Vorrichtung zur Befestigung von Beschlagteilen an Hohlprofilen mit einem in das Hohlprofil einbringbaren Montageeinsatz, der einen in Einbringrichtung am hinteren Ende angeordneten Anlagebund umfasst, der in der eingebrachten Position an einer Befestigungsseite des Hohlprofils anliegt. Der Montageeinsatz ist mit einem Konterstück festlegbar, das in der befestigten Position an der Profilaußenseite anliegt.

Der Erfindung liegt daher die Aufgabe zu Grunde, eine Baugruppe insbesondere für die Befestigung eines Beschlagteils an einem Hohlprofil zu schaffen, bei welcher die gewünschte Drehhemmung des Schraubelements erzielt wird, ohne das hierzu die Wechselwirkung mit einem weiteren Bauteil oder der Angriff eines die Drehhemmung bewirkenden Werkzeugs erforderlich ist.

Diese Aufgabe wird durch die in Anspruch 1 wiedergegebene Baugruppe und durch die in Anspruch 13 wiedergegebene Befestigungsvorrichtung gelöst.

Bei dieser Baugruppe weist das Schraubelement erfindungsgemäß eine Bohrung auf, deren Durchmesser kleiner als der Außendurchmesser des Außengewindes ist. Weiterhin sind erfindungsgemäß das Verhältnis zwischen dem Durchmesser des Außengewindes und dem Durchmesser der Bohrung und/oder die für den Gewindezapfen und für das Schraubelement ausgewählten Materialien und/oder die Gewindegeometrie derart ausgewählt, dass zum Aufdrehen des Schraubelements auf den Gewindezapfen ein vorbestimmtes Drehmoment erforderlich ist. Der Erfindung liegt die überraschende Erkenntnis zu Grunde, dass durch Anpassung eines oder mehrerer der vorstehenden Parameter das zum Aufdrehen des Schraubelements auf den Gewindezapfen erforderliche Drehmoment in weiten Grenzen vorbestimmbar ist. Die Baugruppe findet zur Befestigung eines Beschlagteils Verwendung. Durch Anpassung einer oder mehrerer dieser Parameter ist das zum Aufdrehen erforderliche Drehmoment so gewählt, dass es größer als das maximal bei der späteren Verwendung der Baugruppe zwischen dem Gewindezapfen und dem Schraubelement wirkende Drehmoment ist, welches üblicherweise beim Anziehen oder Lösen der das Beschlagteil durchsetzenden Befestigungsschraube auf das Schraubelement wirkt.

Der Erfindung liegt weiterhin die ganz besonders überraschende Erkenntnis zu Grunde, dass auch das zum Lösen des Schraubelements von dem Gewindezapfen erforderliche Losdrehmoment etwa dem Wert entspricht welcher zum Zusammenschrauben von Gewindezapfen und Schraubelement zuvor erforderlich war, so dass die erfindungsgemäße Baugruppe eine Drehsicherung zwischen dem Gewindezapfen und dem Schraubelement in beiden Drehrichtungen bereitstellt.

Die Bohrung weist an ihrem dem Gewindezapfen zugewandten Ende einen Gewindebereich mit zum Außengewinde komplementärem Innengewinde auf, welcher kürzer als die Länge ist, über welche sich der Gewindezapfen im eingedrehten Zustand in der Bohrung befindet.

Durch diese Maßnahme wird das in Eingriff bringen von Gewindezapfen und Schraubelement beim Zusammenfügen der Baugruppe erleichtert, da sich das Schraubelement zunächst unter Aufbringung eines geringen Drehmoments auf den Gewindezapfen aufdrehen lässt. Die Aufbringung eines erhöhten Drehmoments ist erst dann erforderlich, wenn der Gewindezapfen das Ende des komplementären Innengewindes erreicht hat und das Außengewinde in der Bohrung beim weiteren Eindringen Gewindegänge erzeugen muss.

Versuche haben gezeigt, dass ein für viele Anwendungen der erfindungsgemäßen Baugruppe geeignetes Eindreh- und Losdrehmoment von etwa 15 Nm ergibt, wenn das Außengewinde ein M8 Regelgewinde, der Gewindezapfen aus Edelstahl 1.4567 besteht, dass Schraubelement aus dem Aluminiumwerkstoff EN-AW-6082-T6 besteht und der Durchmesser der Bohrung etwa 7,3 mm beträgt.

Wenn - wie besonders bevorzugt - die Länge des Gewindebereichs in dem Schraubelement etwa 5 mm beträgt, ist einerseits ein einfaches Zusammenfügen von Gewindezapfen und Schraubelement gewährleistet, andererseits wird eine Belastbarkeit der Gewindeverbindung bewirkt, die in den meisten Fällen sicherstellt, dass beim weiteren Drehen der Gewindezapfen in den gewindelosen Bereich der Bohrung eindringt und nicht das Außen- und/oder Innengewinde ausreißen.

Der Gewindezapfen umfasst Mittel zur Dreharretierung.

Bei einer bevorzugten Weiterbildung der erfindungsgemäßen Baugruppe weist das Schraubelement Mittel zum Ansatz eines Drehwerkzeugs auf.

Die Mittel zur Dreharretierung können eine Anlageplatte umfassen, die formschlüssig mit einer Anlagefläche, die an einem anderen Bauteil oder an einer anderen Baugruppe, beispielsweise einem Hohlprofil, an welcher der Gewindezapfen festgelegt werden soll, in Eingriff bringbar sind.

Konstruktiv können diese Mittel dadurch ausgebildet sein, dass an einer Anlageplatte zumindest zwei Gewindezapfen vorgesehen sind, die in separate, in dem Bauteil vorgesehene, voneinander beabstandete Bohrungen eingreifen.

Die Mittel zum Ansatz eines Drehwerkzeugs umfassen vorzugsweise einen Innensechskant, da hierdurch das Schraubelement beziehungsweise der Gewindezapfen mit einer rotationssymmetrischen insbesondere zylindrischen Außenkontur versehen werden können, wodurch die Herstellung und die Montage der erfindungsgemäßen Baugruppe erleichtert werden.

Für viele Anwendungen, beispielsweise für die Montage eines Beschlagteils oder einer weiteren Baugruppe eines Beschlagteils, insbesondere eines Bandteils eines Bandes zur scharniergelenkigen Befestigung eines Flügels an einem Rahmen, besonders geeignet ist die erfindungsgemäße Baugruppe dadurch, dass das Schraubelement Befestigungsmittel für dieses Bauelement beziehungsweise diese Baugruppe in Form einer Gewindebohrung umfasst, in die eine Befestigungsschraube eindrehbar ist.

Bei einer besonders bevorzugten Weiterbildung der die erfindungsgemäße Baugruppe umfassenden Befestigungsvorrichtung weist das Schraubelement an dem dem Beschlagteil zugewandten Ende einen radial über den Außenumfang des Schraubelements überstehenden Bund, dessen Außendurchmesser größer als der Innendurchmesser einer in dem Beschlagteil zugewandten Wandung vorgesehenen Lochung zum Durchtritt des Schraubelements ist. Aufgrund dieser Maßnahme kann die Endstellung des auf den Gewindezapfen aufzuschraubenden Schraubelements als Position definiert werden, in welcher der untere Rand des Bundes an der Außenfläche der die Lochung umfassenden Wandung anliegt. Die freie Stirnfläche des Bundes kann dann eine Anlagefläche für das Beschlagteil bilden, so dass die Gefahr eines Verbiegens der Wandung beim Festziehen der das Beschlagteil in einer Bohrung durchsetzenden Befestigungsschraube nicht besteht.

Ganz besonders bevorzugt ist eine Weiterbildung dieser Befestigungsvorrichtung, bei welcher der Außendurchmesser und die Höhe des Anlagebundes an den Innendurchmesser und die Tiefe der ersten Stufe einer sich von der Montageseite des Befestigungsteils erstreckenden Stufenbohrung in dem Beschlagteil angepasst ist, derart, dass beim montierten Beschlagteil der untere Rand des Bundes mit der Montageseite in einer Ebene liegt. Aufgrund dieser Maßnahme ist gewährleitstet, dass zwischen der Außenfläche der Wandung und der dieser zugewandten Seite des Beschlagteils kein Spalt besteht, welcher einerseits sich auf die optische Anmutung negativ auswirken würde, andererseits das Festsetzen von Verunreinigungen fördern würde. Darüber hinaus führt die auf Grund dieser Weiterbildung erzielte unmittelbare Anlage des Beschlagteils an der Wandung dazu, dass die mit der Befestigungsvorrichtung erzielten Haltekräfte erhöht sind.

In der Zeichnung ist ein Ausführungsbeispiel einer erfindungsgemäßen Baugruppe und deren Verwendung als Befestigungsvorrichtung zur Befestigung eines Beschlagteils an einem Hohlprofil dargestellt. Es zeigen:
- Fig. 1: eine perspektivische Seitenansicht dieses Ausführungsbeispiels bei nicht auf die Gewindezapfen aufgedrehten Schraubelementen;
- Fig. 2: dasselbe Ausführungsbeispiel in einer teilgeschnittenen Ansicht gemäß Fig. 1 von oben, ebenfalls bei nicht auf die Gewindezapfen aufgedrehten Schraubelementen; sowie
- Fig. 3: dasselbe Ausführungsbeispiel in einer Fig. 2 entsprechenden Ansicht, jedoch bei auf die Gewindezapfen aufgedrehten Schraubelementen;
- Fig. 4: eine perspektivische Seitenansicht einer Explosionsdarstellung dieses Ausführungsbeispiels bei Verwendung als Befestigungsvorrichtung;
- Fig. 5: dieselbe Verwendung in einer teilgeschnittenen Ansicht gemäß Fig. 4 von oben, bei nicht auf die Gewindezapfen aufgedrehten Schraubelementen, sowie
- Fig. 6: dieselbe Verwendung in einer Fig. 5 entsprechenden Ansicht, jedoch bei auf die Gewindezapfen aufgedrehten Schraubelementen und mit gestrichelt angedeutetem, montierten Beschlagteil.

Die in der Zeichnung dargestellte Baugruppe 100 umfasst drei Gewindezapfen 1, die senkrecht zu deren Längsachsen S beabstandet drehfest an einer Anlageplatte 2, insbesondere durch Verschweißen, angebracht sind. Die Gewindezapfen weisen Außengewinde 3 auf, die bei dem hier beispielhaft beschriebenen Ausführungsbeispiel als M8 Regelgewinde ausgebildet sind.

Sowohl die Gewindezapfen 1, als auch die Anlageplatte 2 sind aus dem Edelstahlwerkstoff 1.4567 oder 1.43.01 hergestellt.

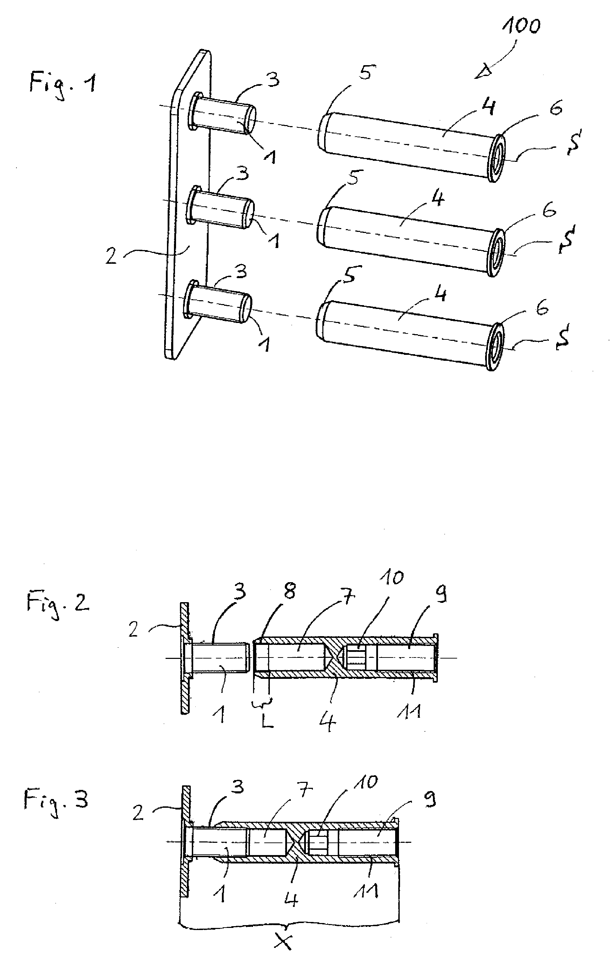

Ferner weist die Baugruppe 100 drei Schraubelemente 4 auf, wobei jedes dieser Schraubelemente - wie aus Fig. 1 sinnfällig wird - einem der Gewindezapfen 1 zugeordnet ist.

Die Schraubelemente 4 sind bei dem hier beschriebenen Ausführungsbeispiel aus dem Aluminiumwerkstoff EN-AW-6082-T6 hergestellt. Sie weisen eine im Wesentlichen zylindrische äußere Form auf. An dem dem jeweiligen Gewindezapfen 1 zugewandten Ende ist zur Erleichterung des Einführens der Schraubelemente 4 in eine Lochung eines in der Zeichnung nicht dargestellten Bauteils jeweils eine Fase 5 vorgesehen. Das der Fase gegenüberliegende Ende eines jeden Schraubelements 4 ist von einem radial über den zylindrischen Teil des Schraubelements 4 überstehenden Anlagebund 6 gebildet.

Wie insbesondere in Fig. 2 erkennbar ist, weist das Schraubelement 4 in seinem dem Gewindezapfen 1 zugewandten Bereich eine Bohrung 7 auf, die als Sacklochbohrung ausgebildet ist. Bei dem dargestellten Ausführungsbeispiel beträgt der Durchmesser der Bohrung 7 etwa 7,3mm.

An dem dem Gewindezapfen 1 zugewandten Endbereich der Bohrung 7 ist diese mit einem M8 Innengewinde 8 ausgestattet, welches sich über eine Länge L von etwa 5mm in die Bohrung 7 hineinerstreckt.

Das Schraubelement 4 weist eine weitere Bohrung 9 auf, die sich von dem dem Gewindezapfen 1 fortweisenden Ende in das Schraubelement 4 hinein erstreckt.

Zum Boden der Bohrung 9 hin ist ein Innensechskant 10 zum Angriff eines in der Zeichnung nicht dargestellten Drehwerkzeugs vorgesehen. Ferner weist die Bohrung 9 ein Innengewinde 11 auf, welches sich vom offenen Ende bis nahe zu zum Innensechskant 10 erstreckt.

Wie in Fig. 3 erkennbar ist, welche die Baugruppe 100 im zusammengefügten Zustand zeigt, ist das Schraubelement 4 über die Länge L hinaus auf den Gewindezapfen 1 aufgedreht, so dass sich das Außengewinde 3 selbsttätig den Fortsatz des Innengewindes 8 in der Bohrung 7 bahnen musste. Bei der hier beschriebenen Ausführungsform ist hierzu ein Drehmoment von etwa 15Nm erforderlich. Zum Lösen des auf den Gewindezapfen 1 aufgeschraubten Schraubelements ist ein Losdrehmoment etwa eines in derselben Größenordnung liegenden Wertes erforderlich, wobei mit losdrehenden Moment das Drehmoment gemeint ist, welches erforderlich ist, um das Schraubelement 4 aus der beim Festdrehen erzeugten Endposition zu Lösen. Zum Herunterdrehen von dem Gewindezapfen 1 ist dann lediglich ein geringeres Drehmoment erforderlich.

Wie aus dem vorstehenden erkenntlich wird, zeichnet sich die erfindungsgemäße Baugruppe unter anderem dadurch aus, dass die zum Ein- und Losdrehen einer in der Zeichnung nicht dargestellten, in die Bohrung 9 eingreifenden Befestigungsschraube zur Befestigung weiterer, in der Zeichnung nicht dargestellter Bauteile beziehungsweise Baugruppen erforderliche Drehhemmung erzielt wird, ohne das hierzu weitere Maßnahmen oder Bauteile erforderlich sind.

Ferner wird insbesondere an Hand von Figuren 2 und 3 sinnfällig, dass die Gesamtlänge X der Baugruppe unter Erzielung der gewünschten Drehhemmung in durch die Länge des Gewindezapfens 1 und des Innengewindes 8 vorgegebenen Grenzen variabel ist, in dem das Schraubelement 4 weiter oder weniger weit auf den Gewindezapfen 1 aufgeschraubt wird.

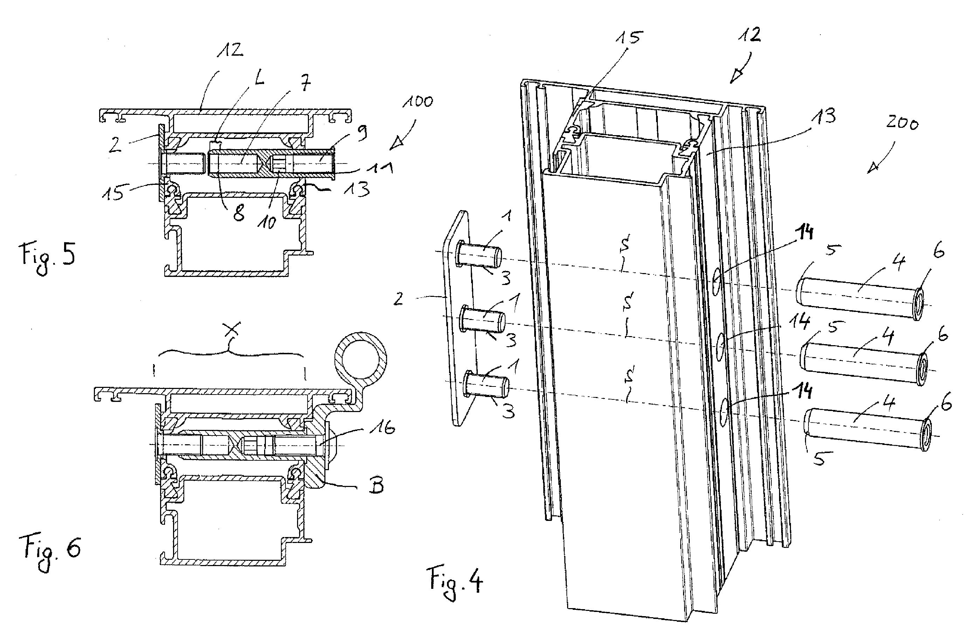

Bei der in den Fig. 4 bis 6 dargestellten Verwendung als Befestigungsvorrichtung 200 dient die Baugruppe 100 der Montage eines Beschlagteils B, lediglich in Fig. 6 gestrichelt angedeutet, an einem Hohlprofil 12, das den Rand eines feststehenden Rahmens oder eines an dem Rahmen scharnierbeweglich gelagerten Flügels bilden kann. Das Hohlprofil 12 weist eine in Fig. 4 rechts dargestellte Befestigungswandung 13 auf, an welcher das Beschlagteil B montiert werden soll. Die Befestigungswandung 13 wird bei dem in der Zeichnung dargestellten Ausführungsbeispiel von einem Kunststoffsteg gebildet, der formschlüssig mit angrenzenden Profilteilen aus einem Aluminiumwerkstoff fest verbunden ist.

In die Befestigungswandung 13 sind in Längsrichtung des Hohlprofils 12 voneinander beabstandet drei Bohrungen 14 eingearbeitet, deren Innendurchmesser an den Außendurchmesser jeweils eines noch weiter unten beschriebenen Schraubelements 4 derart angepasst ist, dass letzteres im wesentlichen spielfrei in die jeweilige Bohrung 14 einschiebbar ist.

In die der Befestigungswandung 13 gegenüberliegenden in Fig. 4 links dargestellten Profilwandung 15 sind fluchtend zu den Bohrungen 14 ebenfalls drei in der Zeichnung nicht erkennbare Bohrungen eingearbeitet, die dem Durchtritt jeweils eines ebenfalls weiter unten beschriebenen Gewindezapfens 1 dienen. Auch die Profilwandung 15 besteht bei dem dargestellten Ausführungsbeispiel aus einem Kunststoffsteg.

Da die Gesamtlänge X der Baugruppe unter Erzielung der gewünschten Drehhemmung in durch die Länge des Gewindezapfens 1 und des Innengewindes 8 vorgegebenen Grenzen variabel ist, indem das Schraubelement 4 weiter oder weniger weit auf den Gewindezapfen 1 aufgeschraubt wird, können mit der erfindungsgemäßen Befestigungsvorrichtung Toleranzen in den Abmessungen des Profils ausgeglichen und die Befestigungsvorrichtung kann für verschiedene Profile verwendet werden.

### Bezugszeichenliste:

- 100: Baugruppe
- 1: Gewindezapfen
- 2: Anlageplatte
- 3: Außengewinde
- 4: Schraubelemente
- 5: Fase
- 6: Anlagebund
- 7: Bohrung
- 8: Innengewinde
- 9: Bohrung
- 10: Innensechskant
- 11: Innengewinde

- L: Länge
- S: Längsachsen
- X: Gesamtlänge

## Patentansprüche

1. Baugruppe (100) zur Befestigung eines Beschlagteils,
mit einem ein Außengewinde (3) umfassenden Gewindezapfen (1),
mit einem Schraubelement (4), welches eine Bohrung (7) umfasst, wobei das Verhältnis zwischen dem Durchmesser des Außengewindes (3) und dem Durchmesser der Bohrung (7) und/oder die für den Gewindezapfen (1) und für das Schraubelement (4) ausgewählte Materialen und/oder die Gewindegeometrie derart gewählt sind, dass zum Aufdrehen des Schraubelements (4) auf den Gewindezapfen (1) ein vorbestimmtes Drehmoment erforderlich ist,
wobei das Schraubelement (4) Befestigungsmittel zur Befestigung des Beschlagteils oder einer weiteren Baugruppe umfasst, und die Befestigungsmittel eine Gewindebohrung (9) umfassen, in die eine Befestigungsschraube eindrehbar ist, wobei der Gewindezapfen (1) Mittel zur Dreharretierung umfasst,
wobei durch Anpassung einer oder mehrerer dieser Parameter das zum Aufdrehen erforderliche Drehmoment so gewählt ist, dass es größer als das maximal bei der späteren Verwendung der Baugruppe zwischen dem Gewindezapfen (1) und dem Schraubelement (4) wirkende Drehmoment ist, welches üblicherweise beim Anziehen oder Lösen der Befestigungsschraube auf das Schraubelement (4) wirkt, **dadurch gekennzeichnet dass**
die Mittel zur Dreharretierung eine Anlageplatte (2) umfassen, die formschlüssig mit einer Anlagefläche in Eingriff bringbar ist oder/und die Mittel zur Dreharretierung dadurch ausgebildet sind, dass an einer Anlageplatte zumindest zwei Gewindezapfen (1) vorgesehen sind, die in separate, voneinander beabstandete Bohrungen eines Bauteils eingreifen, wobei
die Bohrung (7) des Schraubelementes (4), deren Durchmesser kleiner als der Außendurchmesser des Außengewindes (3) des Gewindezapfens (1) ist,
an ihrem dem Gewindezapfen (1) zugewandten Ende einen Gewindebereich mit zum Außengewinde komplementären Innengewinde (8) umfasst welcher kürzer als die Länge ist, über welcher sich der Gewindezapfen (1) im eingedrehten Zustand in der Bohrung (7) befindet.

2. Baugruppe nach Anspruch 1, **dadurch gekennzeichnet, dass** das Außengewinde (3) ein M8 Regelgewinde ist.

3. Baugruppe nach einem der Ansprüche 1 oder 2, **dadurch gekennzeichnet, dass** der Gewindezapfen (1) aus Edelstahl, vorzugsweise aus Edelstahlwerkstoff 1.4567 besteht.

4. Baugruppe nach einem der Ansprüche 1 bis 3, **dadurch gekennzeichnet, dass** das Schraubelement (4) aus dem Aluminiumwerkstoff EN-AW-6082-T6 besteht.

5. Baugruppe nach Anspruch 2 bis 4, **dadurch gekennzeichnet, dass** der Durchmesser der Bohrung (7) etwa 7,3 mm beträgt.

6. Baugruppe nach einem der Ansprüche 1 bis 5, **dadurch gekennzeichnet, dass** die Länge (L) des Innengewindes (8) etwa 5 mm beträgt.

7. Baugruppe nach einem der Ansprüche 1 bis 6, **dadurch gekennzeichnet, dass** das Schraubelement (4) Mittel zum Ansatz eines Drehwerkzeugs umfasst.

8. Baugruppe nach Anspruch 7, **dadurch gekennzeichnet, dass** die Mittel zum Ansatz eines Drehwerkzeugs einen Innensechskant (10) umfassen.

9. Befestigungsvorrichtung (200)
zur Befestigung eines Beschlagteils (B) an einem Hohlprofil (12),
**dadurch gekennzeichnet,**
**dass** die Befestigungsvorrichtung (200) eine Baugruppe (100) nach einem der Ansprüche 1 bis 8 umfasst.

10. Befestigungsvorrichtung nach Anspruch 9, **dadurch gekennzeichnet, dass** das Schraubelement (4) an dem dem Beschlagteil (B) zugewandten Ende einen radial über den Außenumfang des Schraubelements überstehenden Anlagebund (6) umfasst, dessen Außendurchmesser größer als der Innendurchmesser einer der dem Beschlagteil zugewandten Befestigungswandungen (13) vorgesehenen Bohrung (14) zum Durchtritt des Schraubelements (4) ist.

11. Befestigungsvorrichtung nach Anspruch 10, **dadurch gekennzeichnet, dass** der Außendurchmesser und die Höhe des Anlagebundes (6) an den Innendurchmesser und die Tiefe der ersten Stufe einer sich von der Montageseite des Beschlagteils (B) erstreckenden Stufenbohrung angepasst ist derart, dass der untere Rand des Anlagebundes (6) mit der Montageseite in einer Ebene liegt.

## Claims

1. Module (100) for fastening a fitting part,
having a threaded pin (1) comprising an external thread (3),
having a screw element (4) which comprises a bore (7),
wherein the ratio between the diameter of the external thread (3) and the diameter of the bore (7) and/or the material selected for the threaded pin (1) and for the screw element (4) and/or the thread geometry are selected such that, in order to screw the screw element (4) onto the threaded pin (1), a predetermined torque is required,
wherein the screw element (4) comprises fastening means for fastening the fitting part or a further module, and the fastening means comprise a threaded bore (9) into which a fastening screw is screwable, wherein the threaded pin (1) comprises means for rotary locking,
wherein, by adapting one or more of these parameters, the torque required for screwing on is selected such as to be greater than the maximum torque which acts between the threaded pin (1) and the screw element (4) during the subsequent use of the module and which usually acts when the fastening screw is being tightened onto or loosened from the screw element (4), **characterized in that**
the means for rotary locking comprise an abutment plate (2) which can be brought into form-fitting engagement with an abutment surface and/or the means for rotary locking are configured such that at least two threaded pins (1), which engage in separate, spaced-apart bores in a component, are provided on an abutment plate, wherein
the bore (7) in the screw element (4), the diameter of said bore being smaller than the outside diameter of the external thread (3) of the threaded pin (1), comprises, at its end facing the threaded pin (1), a threaded region having an internal thread (8) complementary to the external thread, said threaded region being shorter than the length along which the threaded pin (1) is located in the bore (7) in the screwed-in state.

2. Module according to Claim 1, **characterized in that** the external thread (3) is an M8 coarse thread.

3. Module according to either of Claims 1 and 2, **characterized in that** the threaded pin (1) consists of stainless steel, preferably of stainless steel material 1.4567.

4. Module according to one of Claims 1 to 3, **characterized in that** the screw element (4) consists of the aluminium material EN-AW-6082-T6.

5. Module according to Claims 2 to 4, **characterized in that** the diameter of the bore (7) is about 7.3 mm.

6. Module according to one of Claims 1 to 5, **characterized in that** the length (L) of the internal thread (8) is about 5 mm.

7. Module according to one of Claims 1 to 6, **characterized in that** the screw element (4) comprises means for attaching a screwing tool.

8. Module according to Claim 7, **characterized in that** the means for attaching a screwing tool comprise a hexagon socket (10).

9. Fastening device (200)
for fastening a fitting part (B) on a hollow profile (12),
**characterized in that** the fastening device (200) comprises a module (100) according to one of Claims 1 to 8.

10. Fastening device according to Claim 9, **characterized in that** the screw element (4) comprises, at the end facing the fitting part (B), an abutment collar (6) that protrudes radially beyond the outer circumference of the screw element, the outside diameter of said abutment collar (6) being larger than the inside diameter of a bore (14), provided in one of the fastening walls (13) facing the fitting part, for the screw element (4) to pass through.

11. Fastening device according to Claim 10, **characterized in that** the outside diameter and the height of the abutment collar (6) are adapted to the inside diameter and the depth of the first step of a stepped bore extending from the mounting side of the fitting part (B), such that the lower rim of the abutment collar (6) is located in a plane with the mounting side.

## Revendications

1. Module (100) pour la fixation d'une partie de ferrure, avec un tourillon fileté (1) comprenant un filetage extérieur (3), avec un élément de vissage (4) qui comprend un alésage (7), le rapport entre le diamètre du filetage extérieur (3) et le diamètre de l'alésage (7) et/ou les matériaux choisis pour le tourillon fileté (1) et pour l'élément de vissage (4) et/ou la géométrie de filetage étant choisis de telle sorte qu'un couple prédéterminé soit nécessaire pour le vissage de l'élément de vissage (4) sur le tourillon fileté (1),
l'élément de vissage (4) comprenant des moyens de fixation pour la fixation de la partie de ferrure ou d'un module supplémentaire, et les moyens de fixation comprenant un alésage fileté (9) dans lequel peut être vissée une vis de fixation, le tourillon fileté (1) comprenant des moyens de blocage de la rotation,
le couple nécessaire pour le vissage étant choisi par adaptation d'un ou de plusieurs de ces paramètres de telle sorte qu'il soit supérieur au couple maximum agissant lors de l'utilisation ultérieure du module entre le tourillon fileté (1) et l'élément de vissage (4), lequel couple agit habituellement lors du vissage ou du desserrage de la vis de fixation sur l'élément de vissage (4), **caractérisé en ce que**
les moyens de blocage de la rotation comprennent une plaque d'appui (2) qui peut être amenée en prise par engagement par correspondance de forme avec une surface d'appui et/ou les moyens de blocage de la rotation sont réalisés pour par le fait qu'au moins deux tourillons filetés (1) sont prévus au niveau d'une plaque d'appui, lesquels viennent en prise dans des alésages séparés et espacés mutuellement d'un composant, l'alésage (7) de l'élément de vissage (4), dont le diamètre est inférieur au diamètre extérieur du filetage extérieur (3) du tourillon fileté (1), au niveau de son extrémité tournée vers le tourillon fileté (1), comprenant une région filetée avec un filetage intérieur (8) complémentaire du filetage extérieur, lequel est plus court que la longueur suivant laquelle le tourillon fileté (1) se trouve dans l'alésage (7) dans l'état vissé.

2. Module selon la revendication 1, **caractérisé en ce que** le filetage extérieur (3) est un filetage normal M8.

3. Module selon l'une quelconque des revendications 1 ou 2, **caractérisé en ce que** le tourillon fileté (1) est constitué d'acier spécial, de préférence d'un matériau en acier spécial 1.4567.

4. Module selon l'une quelconque des revendications 1 à 3, **caractérisé en ce que** l'élément de vissage (4) se compose d'un matériau en aluminium EN-AW-6082-T6.

5. Module selon les revendications 2 à 4, **caractérisé en ce que** le diamètre de l'alésage (7) mesure environ 7,3 mm.

6. Module selon l'une quelconque des revendications 1 à 5, **caractérisé en ce que** la longueur (L) du filetage intérieur (8) mesure environ 5 mm.

7. Module selon l'une quelconque des revendications 1 à 6, **caractérisé en ce que** l'élément de vissage (4) comprend des moyens pour l'application d'un outil de vissage.

8. Module selon la revendication 7, **caractérisé en ce que** les moyens pour l'application d'un outil de vissage comprennent une formation à six pans creux (10).

9. Dispositif de fixation (200) pour la fixation d'une partie de ferrure (B) sur un profilé creux (12),
**caractérisé en ce que** le dispositif de fixation (200) comprend un module (100) selon l'une quelconque des revendications 1 à 8.

10. Dispositif de fixation selon la revendication 9, **caractérisé en ce que** l'élément de vissage (4) comprend, au niveau de l'extrémité tournée vers la partie de ferrure (B), un épaulement d'appui (6) faisant saillie radialement au-delà de la périphérie extérieure de l'élément de vissage, dont le diamètre extérieur est supérieur au diamètre intérieur d'un alésage (14) prévu dans l'une des parois de fixation (13) tournées vers la partie de ferrure pour le passage de l'élément de vissage (4).

11. Dispositif de fixation selon la revendication 10, **caractérisé en ce que** le diamètre extérieur et la hauteur de l'épaulement d'appui (6) au niveau du diamètre intérieur et la profondeur du premier étage d'un alésage étagé s'étendant depuis le côté de montage de la partie de ferrure (B) sont adaptés de telle sorte que le bord inférieur de l'épaulement d'appui (6) se situe avec le côté de montage dans un plan.
